Europäisches Patentamt

(19) European Patent Office

Office européen des brevets

(11) Publication number: **0 046 472**
**B1**

(12) **EUROPEAN PATENT SPECIFICATION**

(45) Date of publication of patent specification: **01.08.84**

(51) Int. Cl.³: **B 01 D 53/04**

(21) Application number: **80304274.6**

(22) Date of filing: **27.11.80**

(54) **Process and apparatus for recovering hydrocarbons from air-hydrocarbon vapor mixtures.**

(30) Priority: **26.08.80 US 181429**

(43) Date of publication of application:
**03.03.82 Bulletin 82/9**

(45) Publication of the grant of the patent:
**01.08.84 Bulletin 84/31**

(84) Designated Contracting States:
**BE DE FR GB IT NL**

(56) References cited:
**EP - A - 0 022 315**
**DE - A - 1 544 113**
**US - A - 3 455 089**
**US - A - 3 867 111**
**US - A - 4 066 423**

(73) Proprietor: **JOHN ZINK COMPANY**
**4401, South Peoria**
**Tulsa, Oklahoma 74103 (US)**

(72) Inventor: **Dinsmore, Harold L.**
**Tulsa Oklahoma (US)**

(74) Representative: **Allen, William Guy Fairfax et al,**
**J.A. KEMP & CO. 14 South Square Gray's Inn**
**London WC1R 5EU (GB)**

Courier Press, Leamington Spa, England.

## Description

The present invention relates to a process and apparatus for recovering hydrocarbons from air-hydrocarbon vapor mixtures.

In handling multicomponent hydrocarbon liquids, such as gasolene or kerosene, air-hydrocarbon vapor mixtures are readily produced which cannot be vented directly to the atmosphere due to the resulting pollution and fire or explosion hazzard. Consequently, various proposals have been made for removing the hydrocarbon vapors from such mixtures, whereby the remaining air can safely be vented to atmosphere. The removed hydrocarbons are generally liquefied and recombined with hydrocarbon liquid from which they were vaporized, thereby making their recovery economically advantageous.

A process for the recovery of light mixed hydrocarbon vapors from a mixture with air expelled as a result of storage breathing or loading of a vented hydrocarbon vessel is described in US—A—4 066 423. The hydrocarbon vapor mixture is passed through a first bed of solid adsorbent, which adsorbs a majority of the hydrocarbons contained in the mixture and the residue gas is substantially hydrocarbon-free air. While this adsorbing is taking place, a second bed of solid adsorbent having hydrocarbons adsorbed therein is regenerated by evacuation. The completeness of the regeneration of the adsorption beds is dependent solely on the degree of vacuum produced in the beds. Because vacuum pumps are incapable of lowering the pressure to zero, some adsorbed hydrocarbons are left, and this reduces the capacity of the beds to adsorb additional hydrocarbons and reduces the service life of the adsorbent.

The hydrocarbon-rich air-hydrocarbon mixture produced as a result of the regeneration of the bed is contacted with a liquid absorbent, whereby hydrocarbons are removed therefrom and the residue gas stream from the absorption step is recycled to the bed through which the inlet air-hydrocarbon mixture is flowing. The liquid absorbent utilized in U.S. Patent 4,066,423 is produced by condensing, by cooling, liquid hydrocarbons from the air-hydrocarbon vapor mixture produced in the evacuation regeneration step.

Numerous other suitable processes and apparatus are disclosed, e.g. in US—A—3,897,193; —3,768,232; —3,867,111; —3,455,089; —3,543,484 and —3,766,283. These all use solid adsorbent for removing hydrocarbons and regeneration of the adsorbent is incomplete, whereby hydrocarbons are left on the adsorbent, reducing the capacity, efficiency and service life thereof.

In our co-pending European Patent Application No. 80301936.3 claiming priority of 08.06.79 from US 46765 (EP—A—0022315) the vacuum pumping is disclosed as being carried out using a liquid seal vacuum pump, and the flow of liquid absorbent is divided into a first portion and a second portion, of which the first portion is passed in heat exchange relationship with the seal liquid of the vacuum pump to heat the first portion and cool the seal liquid before being passed through a contact tower in contact with the air-hydrocarbon mixture produced during evaporation, and the second portion is passed to a separator vessel where the liquid leaving the contact tower is separated into hydrocarbon liquid and liquid absorbent.

The present invention provides a process for recovering hydrocarbons from an inlet air-hydrocarbon vapor mixture comprising: passing said inlet mixture through a first bed of solid adsorbent having an affinity for hydrocarbons, whereby hydrocarbons are adsorbed on said bed and a residue gas stream of substantially hydrocarbon-free air is produced; venting the substantially hydrocarbon-free air to the atmosphere; evacuating a second bed of solid adsorbent having hydrocarbons adsorbed thereon by vacuum pumping, using a liquid seal vacuum pump to desorb the hydrocarbons from the bed; separating the air and hydrocarbons absorbed by said seal liquid in the liquid seal vacuum pump from the seal liquid in a separator; contacting the separated air-hydrocarbon mixture produced during the separation with a liquid absorbent having an affinity for hydrocarbons in a contact tower, whereby a major portion of the hydrocarbons is removed therefrom to result in a hydrocarbon-rich liquid absorbent and a residue gas stream comprising air and a minor portion of hydrocarbons; combining the residue gas stream with the inlet air, whereby hydrocarbons contained therein are adsorbed on the first bed of solid adsorbent; periodically changing the flow pattern of the inlet air-hydrocarbon mixture and changing the bed of solid adsorbent being evacuated, whereby, when the bed through which the inlet air-hydrocarbon mixture is flowing becomes loaded with adsorbed hydrocarbons, the inlet air-hydrocarbon mixture is caused to flow through the bed which has just been evacuated; wherein the flow of liquid absorbent to the contact tower with the hydrocarbon-rich air hydrocarbon mixture produced during evacuation is divided into a first portion and a second portion; wherein the first portion is passed in heat exchange relationship with the seal flowing to the vacuum pump from the separator, to heat the first portion and cool the seal liquid, and is then introduced to the contact tower; and wherein the second portion is fed to said contact tower without undergoing said heat exchange.

This achieves a more complete regeneration of the adsorbent than can be accomplished by prior processes thereby making the process more efficient, more economical to carry out and increasing the service life of the adsorbent used.

Advantageously, a stream of the liquid from which the hydrocarbon vapors originated is used to absorb the removed hydrocarbons in a simple and economical system, thereby obviating the need for condensing the removed hydrocarbons using elaborate refrigeration or other similar apparatus, which is expensive to install and operate.

A quantity of hydrocarbon-free air may be introduced into the second bed while evacuating said bed, whereby additional hydrocarbons are stripped from the bed and an additional air hydrocarbon mixture is produced. The hydrocarbon-free air is advantageously heated prior to introducing into the bed for this purpose, to improve the efficiency of the thus achieved stripping action.

Desirably, the hydrocarbons contained in the inlet air-hydrocarbon mixture are vaporized gasolene light ends, the liquid absorbent utilized being gasolene and the gasolene being continuously recycled between the contact tower and a source of stored gasolene.

Advantageously, the first and second portions of the liquid absorbent are fed to different levels of the contact tower, the second portion being fed at a higher level thereof than the first heated portion.

The invention also provides apparatus for recovering hydrocarbons from an air-hydrocarbon vapor mixture, comprising: a pair of adsorbers containing beds of solid adsorbent having an affinity for hydrocarbons and having first and second connections on opposite sides of said beds; valves associated with said first connections for selectively causing air-hydrocarbon vapor mixture to flow through one or the other of said adsorbers and from the associated second connection to atmosphere; a liquid seal vacuum pump having a suction connection selectively connectable, *via* valve means, to the other of said adsorbers; and a separator connected to the discharge connection of the vacuum pump for separating out the air-hydrocarbon vapor mixture from the seal liquid in which it becomes absorbed in the vacuum pump; and a contact tower to contact the separated air-hydrocarbon vapor mixture with a liquid absorbent; wherein the liquid absorbent feed to the contact tower is through (a) a first feed pipe which is connected to one side of a heat exchanger, the other side of which is connected to the seal liquid circuit of the vacuum pump and the separator, and (b) a second feed pipe by-passing said heat exchanger and opening into said contact tower, whereby the seal liquid is cooled and the liquid absorbent fed through the first feed pipe is heated before being fed to the contact tower.

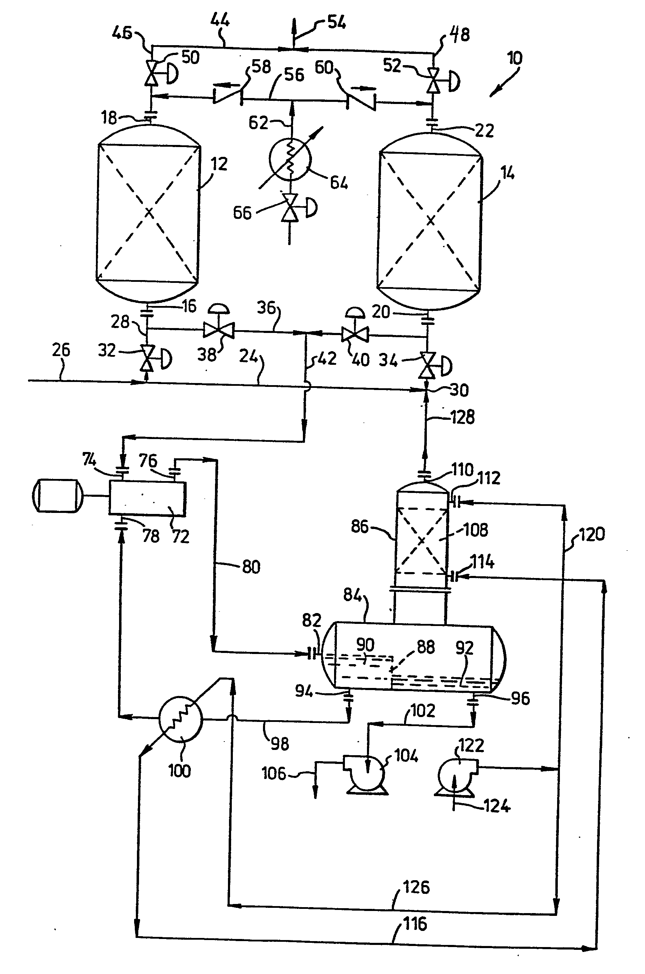

In order that the invention will more readily be understood, the following description is given, merely by way of example, reference being made to the accompanying drawing, in which the only Figure is a schematic flow diagram of one embodiment of apparatus according to the invention, use of the apparatus illustrating the process of the invention. The illustrated apparatus of the present invention is designated by the numeral 10 and comprises a pair of adsorbers 12 and 14, which have inlet connections 16, 20 and outlet connections 18, 22 respectively, to cause the gases to flow through a bed of solid adsorbent in each adsorber. Activated carbon is the preferred adsorbent, in that it is particularly suitable for adsorbing light hydrocarbon vapors of the type found in air-hydrocarbon vapor mixtures and for vacuum regeneration. An inlet header 24 is connected to an inlet conduit 26, and to adsorbers 12 and 14, *via* a pair of conduits 28 and 30 having switching valves 32 and 34, respectively. Also connected to conduits 28 and 30, but at points thereon between the valves 32 and 34 and the connections 16 and 20 of the adsorbers 12 and 14, is a header 36, itself having switching valves 38 and 40. Between valves 38 and 40, the header 36 is connected to a conduit 42. A residue gas header 44 is connected *via* a pair of conduits 46 and 48, provided with valves 50 and 52, to the connections 18 and 22 of the adsorbers 12 and 14. Conduit 54, which may include a flame arrestor (not shown), is connected to the header 44 between valves 50 and 52 and serves to vent residue gas to atmosphere. A stripping air header 56 is connected to the conduits 46 and 48, below valves 50 and 52 and includes a pair of check valves 58 and 60, arranged on either side of the conduit 62, to which is connected an air heater 64 and an air inlet valve 66. The end of the conduit 62 upstream of valve 66 is left open to atmosphere and an air filter (not shown) may be attached thereto to prevent solid impurities entering the adsorbers.

The other end of conduit 42 is connected to the suction inlet 74 of a vacuum pump 72 of the liquid seal or liquid ring type. Such a pump is capable of producing a high vacuum, is relatively inexpensive and is much safer in this type of service. Conventionally, such a pump uses a liquid seal which is circulated through the pump and can be confined in a closed circuit and cooled, which keeps the pump and the gases flowing therethrough cool, the presence of the liquid seal precluding any possibility of explosions, since the gas cannot approach its autoignition temperature, nor can sparking occur due to mechanical failures within the pump.

The pump 72 includes a discharge connection 76 and a seal liquid inlet connection 78 for returning seal liquid thereto. A conduit 80 is connected to the discharge connection 76 and to the inlet 82 of a separator 84, the top of which is preferably integral with a contact tower 86, although the contact tower 86 and separator could be separate vessels.

The separator 84 is a three-phase separator capable of separating (a) the seal liquid for the pump 72, (b) condensed hydrocarbons and the liquid absorbent (in this case the same hydrocarbon liquid) and (c) an air-hydrocarbon vapor mixture from each other. The separator 84 shown, includes a weir 88 which divides the separator into a forward compartment 90 and a rear 92. The liquids entering the separator are separated in the forward compartment, the seal liquid being heavier and immiscible with the condensed hydrocarbon liquids, so that the seal liquid accumulates in the bottom of the compartment 90 from where it is removed via an outlet connection 94. Condensed hydrocarbon liquids spill over the weir into compartment 92 and hydrocarbon-rich liquid absorbent from the absorber 86 enters the compartment 92 by way of the open bottom of the contact tower 86 and also accumulates in the compartment 92. Hydrocarbon-rich liquid absorbent is removed from the separator 84 by way of an outlet connection 96, while the separated air-hydrocarbon vapor mixture passes from the separator 84 into the absorber 86. It will of course be appreciated that, in this particular case, references to hydrocarbon-rich liquid absorbent denote hydrocarbon liquid having arrived in the contact tower 86 by way of the two absorbent inlets 112, 114, and hydrocarbon gas arriving in the separator 84 along with the liquid from the pump 72.

A conduit 98 extends from connection 94 to the seal liquid inlet connection 78 of the pump 72 and passes through a cooler 100. In certain instances, a circulation pump can be provided in conduit 98 between the separator 84 and cooler 100, which may be in the form of a heat-exchanger, which cools the seal liquid by passing it in heat-exchange relationship with the stream of liquid of the same characteristics as that used as the absorption medium in the absorber 86. Rich liquid absorbent-condensed hydrocarbon liquids may be discharged from compartment 92 via outlet 96, conduit 102, pump 104 and conduit 106, where it is preferably stored separately from the lean liquid absorbent to ensure the lowest possible vapor pressure of the lean liquid absorbent and maximum efficiency.

The contact tower 86 includes a section of packing material 108, for example vapor liquid contact trays or the like, disposed in the top portion to bring about intimate contact between the liquid absorbent flowing downwardly and the air-vapor mixture flowing upwardly, residue gas outlet connection 110 and liquid absorbent inlet connection 112 are provided above the packed section 108, the lean liquid absorbent inlet 112 being connected via conduit 120 to a lean liquid absorbent source 124, the liquid being delivered by pump 122. A portion of the pumped liquid is fed via line 126 to the exchanger (cooler) 100 and thence via line 116 to the inlet connection 114 of the contact tower 86.

In certain cases, the lean liquid absorbent may be too warm to use directly as an absorbent and seal liquid coolant, and a heat exchanger (not shown) can be disposed in conduit 114 so that it may be cooled, e.g. by water or a refrigerant.

The residue gas stream produced in the absorber 86 leaves via connection 110 and flows into conduit 128 and thence to header 24.

The switching of valves 32, 34, 38, 40, 50, 52, 66 and 124 can be effected manually, but is preferably automatically controlled by a conventional cycle controller. The length of each cycle can be controlled by a timer or other instrument sensing one or more variables in the operation of the apparatus, such as the degree of vacuum achieved in the adsorbent bed being generated, the composition of the gas stream being vented to the atmosphere etc.

In operation, the various valves are operated so that the inlet air-hydrocarbon vapor mixture is caused to flow through one of the adsorbers 12 or 14, while the other is being regenerated. For example, during a first cycle, valves 32 and 50 are opened and the remaining valves closed, whereby the mixture flows into the adsorber 12 but not into the adsorber 14 and flows from adsorber 12 via conduit 46 and header 44 to the air vent conduit 54. With valve 38 closed and valve 40 opened, the adsorbent bed within the adsorber 14 communicates with the suction connection 74 of vacuum pump 72, at this time the valve 66 being closed.

During this first part of the cycle, gases flowing through adsorber 12 have the hydrocarbons adsorbed on the bed and a substantially hydrocarbon free air is vented to atmosphere. Simultaneously, the adsorbent disposed in adsorber 14 is evacuated and the hydrocarbons are desorbed therefrom. A hydrocarbon-rich air-hydrocarbon vapor mixture is withdrawn from the bed in adsorber 14 and flows through the vacuum pump 72. A cooled seal liquid, preferably water or a mixture of water and a substance which functions as an anti-freeze agent in the winter and as an agent to lower seal liquid vapor pressure in the summer, e.g. ethylene glycol, flows into the vacuum pump 72. The intimate contact of the air-hydrocarbon mixture with the cool seal liquid while flowing through the vacuum pump cools the vapor mixture and causes heavy hydrocarbons contained therein to be condensed. The resulting stream of hydrocarbon-rich air-hydrocarbon vapor mixture and seal liquid and condensed hydrocarbon liquids flows from the pump into the separator 84. While passing through the separator, the air-hydrocarbon vapor mixture, seal liquid and condensed hydrocarbons are separated from each other in the manner previously described, the separated condensed hydrocarbon liquids spilling over the weir 88 and flowing into the compartment 92 where they combine with rich liquid absorbent which flows into the compartment 92 from the contact tower 86 and is removed therefrom by way of the connection 96 to a storage facility.

A stream of lean liquid absorbent is pumped from the source by the pump 116 and flows into the absorber 86 as well as through the heat exchanger 100 as described above. The absorbent flows downwardly within the absorber and intimately contacts the separated air-hydrocarbon mixture which is flowing upwardly through the separator so that the hydrocarbons are adsorbed and removed, so that a residue gas stream contains a major portion of air and a minor portion of hydrocarbons. This stream leaves the absorber and flows into the header 24 where it combines with the inlet air-hydrocarbon vapor mixture and flows through the adsorber 12 where the hydrocarbons are absorbed therefrom.

During the latter part of this cycle, after a major portion of the hydrocarbons adsorbed in the bed of adsorbent within the adsorber 14 have been desorbed therefrom by the vacuum pump 72, valve 66 in conduit 62 is opened, whereby a relatively small quantity of hydrocarbon-free air from the atmosphere enters, is heated, flows through check valve 60 into the adsorber 14. This heated air flows through the bed of adsorbent and is withdrawn therefrom by the vacuum pump 72 as described previously. The air serves to strip additional hydrocarbons from the bed which were not desorbed by the action of the vacuum pumping.

Thus, the combination of the initial evacuation of the adsorber 14 by vacuum pumping, stripping the adsorbent bed with heated hydrocarbon-free air and then evacuating the adsorbent bed brings about the regeneration of the bed to a greater degree than is possible by vacuum pumping alone. This more complete regeneration of the bed increases the capacity of the bed to adsorb additional hydrocarbons, increases the overall efficiency of the apparatus 10 and increases the service life of the adsorbent.

After the adsorbent bed within the adsorber 14 has been fully regenerated and that within the adsorber 12 has been fully loaded with hydrocarbons, the switching valves are reversed, so that adsorber 14 acts to adsorb the hydrocarbons from the incoming mixture from the contact tower 86, whilst the adsorber 12 is regenerated in the same manner as described above. The flow pattern is continuously changed or cycled whereby when the adsorbent bed through which the inlet vapor mixture is flowing becomes loaded with adsorbed hydrocarbons, the inlet mixture is caused to flow into the bed which has thus been regenerated.

The apparatus is particularly suitable for recovering vaporized gasolene light ends mixed with air produced as a result of loading gasolene into tank trucks and other vessels. In this application, the air-gasolene vapor mixture is processed in the apparatus and the liquid absorbent used is gasolene which can be pumped from a storage facility into the contact tower 86 from which the rich gasolene and condensed hydrocarbons are returned to the gasolene storage.

Example

A typical gasolene truck loading terminal has the following loading pattern:—

| | |
|---|---|
| Maximum instantaneous rate | —8000 litres per minute |
| Maximum throughput in 15 minutes | —60,000 litres |
| Maximum throughput in 1 hour | —174,545 litres |
| Maximum throughput in 4 hours | —610,909 litres |
| Maximum throughput daily | —349,090 litres |

The gasolene loaded is deemed to have the following properties:—

Summer: 543 millimetres mercury rvp, 24°C maximum.

Winter: 760 millimetres mercury rvp, −12°C minimum.

It is recognized that the hydrocarbon concentration of the air-hydrocarbon vapor generated by loading gasolene into the trucks will vary according to gasolene volatility and the degree of air saturation attained. Based on the above gasolene properties and other experience, a desired hydrocarbon concentration of 35% by volume is selected.

The apparatus is designed for an approximately 15 minutes cycle time and consequently it is necessary to design each adsorption vessel 12 and 14 to handle a net air-hydrocarbon vapor influent of 10 cubic metres per minute and 75 cubic metres per minute each cycle, based on a 1.2 vapor growth factor. Approximately 4100 kilograms of the appropriate activated carbon is chosen and distributed equally in two 2.14 metre in diameter by approximately 2.4 metre in height adsorption vessels 12 and 14. These vessels are operated near ambient temperature and only slightly above atmospheric pressure during the adsorption cycle. A liquid ring vacuum pump 72 with a 22.4 kilowatt output electric motor is provided for regeneration of the beds of carbon after each adsorption cycle. Very effective regeneration of the carbon beds can be accomplished in each cycle by the introduction, under high vacuum conditions, of approximately .85 standard cubic metres of air heated to 93°C to 149°C. The regeneration apparatus provided allows attainment of 49 millimetres of mercury absolute pressure each cycle with the vacuum pump 72 alone, and with the vacuum assist ejector 68, an absolute pressure of 12 millimetres of mercury or less.

To accomplish the object of recovery, concentrated hydrocarbon vapors containing only 5 to 20% by volume air are discharged from the vacuum pump 72 to a 61 centimetre diameter by approximately 3.6 metre high packed contact tower 86 integrally connected to a 1 metre diameter by approximately 2.4 metre length separator 84, where the major portion of the hydrocarbon vapors are absorbed and thereby recovered into a downward flowing system of gasolene. The lighter portion of hydrocarbon vapors not immediately absorbed into the gasolene absorbent leaves the top of the contact tower where they flow to whichever adsorber 12 or 14 is in the adsorption mode. Eventually almost all of the hydrocarbon vapors are recovered.

The pumps 104 and 122 are centrifugal pumps, each with 3.73 kilo watt output electric motor drivers which circulate 57 litres per minute of gasolene from storage facilities for purposes of providing the absorption medium and to provide the necessary seal fluid cooling medium.

The apparatus described above can be expected to remove and recover the hydrocarbon vapors generated from the transport loading rack such that less than 10 milligrams of hydrocarbons will be vented to the atmosphere per litre of gasolene loaded.

## Claims

1. A process for recovering hydrocarbons from an inlet air-hydrocarbon vapor mixture comprising: passing said inlet mixture through a first bed of solid adsorbent having an affinity for hydrocarbons, whereby hydrocarbons are adsorbed on said bed and a residue gas stream of substantially hydrocarbon-free air is produced; venting the substantially hydrocarbon-free air to the atmosphere; evacuating a second bed of solid absorbent having hydrocarbons adsorbed thereon by vacuum pumping, using a liquid seal vacuum pump (72), to desorb the hydrocarbons from the bed; separating the air and hydrocarbons absorbed by said seal liquid in the liquid seal vacuum pump from the seal liquid in a separator (84); contacting the separated air hydrocarbon mixture produced during the separation with a liquid absorbent having an affinity for hydrocarbons in a contact tower (86), whereby a major portion of the hydrocarbons is removed therefrom to result in a hydrocarbon-rich liquid absorbent and a residue gas stream comprising air and a minor portion of hydrocarbons; combining the residue gas stream with the inlet air, whereby hydrocarbons contained therein are adsorbed on the first bed of solid adsorbent; periodically changing the flow pattern of the inlet air-hydrocarbon mixture and changing the bed of solid adsorbent being evacuated, whereby, when the bed through which the inlet air-hydrocarbon mixture is flowing becomes loaded with adsorbed hydrocarbons, the inlet air-hydrocarbon mixture is caused to flow through the bed which has just been evacuated; wherein the flow of liquid absorbent to the contact tower (86) with the hydrocarbon-rich air-hydrocarbon mixture produced during evacuation is divided into a first portion and a second portion; wherein the first portion is passed in heat exchange relationship with the seal liquid flowing to the vacuum pump from the separator, to heat the first portion and cool the seal liquid, and is then introduced to the contact tower (86); and wherein the second portion is fed to said contact tower (86) without undergoing said heat exchange.

2. A process according to claim 1, wherein a quantity of hydrocarbon-free air is introduced into said second bed while evacuating said bed, whereby additional hydrocarbons are stripped from said bed and an additional air hydrocarbon mixture is produced.

3. A process according to claim 2, wherein the hydrocarbon-free air is heated prior to introducing into said bed.

4. A process according to claim 1, wherein the first and second portions of the liquid absorbent are fed to different levels of said contact tower, and the second portion is fed at a higher level thereof than the heated first portion.

5. A process according to any preceding claim, wherein the hydrocarbons contained in the inlet air-hydrocarbon mixture are vaporized gasolene light ends; in that the liquid absorbent utilized is gasolene; and in that the gasolene is continuously recycled between the contact tower (86) and a source of stored gasolene.

6. Apparatus for recovering hydrocarbons from an air-hydrocarbon vapor mixture, comprising: a pair of absorbers (12, 14) containing beds of solid adsorbent having an affinity for hydrocarbons and having first (16, 20) and second (18, 22) connections on opposite sides of said beds; valves (32, 34) associated with said first connections for selectively causing air-hydrocarbon vapor mixture to flow through one or the other of said adsorbers and from the associated second connection to atmosphere; a liquid seal vacuum pump (72) having a suction connection selectively connectable, *via* valve means (38, 40), to the other of said adsorbers (12, 14); and a separator (84) connected to the discharge connection (76) of the vacuum pump (72) for separating out the air-hydrocarbon vapor mixture from the seal liquid in which it becomes absorbed in the vacuum pump; and a contact tower (86) to contact the separated air-hydrocarbon vapor mixture with a liquid adsorbent; where in the liquid absorbent feed to the contact tower (86) is through (a) a first feed pipe (126, 116), which is connected to one side of a heat exchanger (100), the other side of which is connected to the seal liquid circuit (80, 98, 78) of the vacuum pump (72), and the separator (84), and (b) a second feed pipe (120) by-passing said heat exchanger (100) and opening into said contact tower (86), whereby the seal liquid is cooled and the liquid absorbent fed through the first feed pipe (126, 116) is heated before being fed to the contact tower (86).

7. Apparatus according to claim 6, wherein said second feed pipe (120) is connected to said contact tower (86) at a point (112) above the point (114) at which said first feed pipe (126, 116) is connected thereto.

8. Apparatus according to claim 7, wherein the contact tower (86) is mounted on said separator, whereby hydrocarbon rich liquid absorbent falls from the contact tower (86) to said separator (84).

9. Apparatus according to claim 6, 7 or 8, wherein an air inlet (62, 66) is provided for selectively allowing air to be drawn in via said second connection to said other of the adsorbers (12, 14) during evacuation thereof.

## Patentansprüche

1. Verfahren zum Rückgewinnen von Kohlenwasserstoffen aus einem zugeführten Kohlenwasserstoffdampf-Luft-Gemisch, beinhaltend die Schritte: Durchleiten des zugeführten Gemisches durch ein erstes Bett von Feststoff-Adsorptionsmitteln mit einer Affinität für Kohlenwasserstoffe, wobei Kohlenwasserstoffe an diesem Bett adsorbiert werden und ein Restgasstrom von im wesentlichen kohlenwasserstoff-freier Luft erzeugt wird; Entweichenlassen der im wesentlichen kohlenwasserstoff-freien Luft in die Atmosphäre; Evakuieren durch Pumpen eines zweiten Bettes von Feststoff-Adsorptionsmitteln, an welchem Bett Kohlenwasserstoffe adsorbiert sind, unter Anwenden einer Flüssigkeitsring-Saugpumpe (Vakuumpumpe 72), um die Kohlenwasserstoffe von dem Bett zu desorbieren; Trennen der Luft und der Kohlenwasserstoffe, die von der Sperrflüssigkeit in der Flüssigkeitsring-Vakuumpumpe absorbiert wurden, von der Sperrflüssigkeit in einem Separator (84); Kontaktieren des separierten, während des Separationsprozesses erzeugten Kohlenwasserstoff-Luft-Gemisches mit einem flüssigen Absorptionsmittel, das eine Affinität zu Kohlenwasserstoffen hat, in einem Kontaktturm (86), wobei der größere Teil der Kohlenwasserstoffe von jenem entfernt sowie als Ergebnis ein kohlenwasserstoffreiches flüssiges Absorptionsmittel und ein Restgasstrom bestehend aus Luft und einem geringen Kohlenwasserstof-Anteil erhalten wird; Zusammenführen des Restgasstromes mit der Zuluft, wobei darin enthaltene Kohlenwasserstoffe an dem ersten Feststoff-Adsorptionsbett adsorbiert werden; Periodisches Wechseln der Strömungs-Richtungen des zugeführten Kohlenwasserstoff-Luft-Gemisches und Wechseln des gerade evakuierten Feststoff-Adsorber-Bettes, wodurch das zugeführte Kohlenwasserstoff-Luft-Gemisch, sobald das Bett, durch welches das zugeführte Kohlenwasserstoff-Luft-Gemisch gerade strömt, mit adsorbierten Kohlenwasserstoffen gesättigt ist, veranlaßt wird, durch dasjenige Bett zu ströjen, das gerate evakuiert worden war; wobei die kennzeichnenden Schritte durchgeführt werden: Teilen des Flusses des flüssigen Absorptionsmittels mit dem während des Evakuierens erzeugten kohlenwasserstoffreichen Kohlenwasserstoff-Luft-Gemisch in eine erste und in eine zweite Partie; Durchleiten der ersten Partie unter Wärmetausch mit der vom Separator zur Vakuumpumpe fließenden Sperrflüssigkeit, um die erste Partie zu erwärmen und um die Sperrflüssigkeit zu kühlen, und anschließendes Einleiten in den Kontaktturm (86); und Einspeisen der zweiten Partie ohne Durchführen eines Wärmetausches in den Kontaktturm (86).

2. Verfahren nach Anspruch 1, gekennzeichnet durch Einleiten einer bestimmten Menge von kohlenstofffreier Luft in das vorgenannte zweite Bett unter Evakuieren dieses Bettes, wodurch zusätzlich Kohlenwasserstoff aus dem Bett abgeleitet und ein zusätzliches Kohlenwasserstoff-Luft-Gemisch erzeugt wird.

3. Verfahren nach Anspruch 2, gekennzeichnet durch Erhitzen der Kohlenwasserstoff-freien Luft vor dem Einleiten in das genannte Bett.-

4. Verfahren nach Anspruch 1, gekennzeichnet durch Einspeisen der ersten und der zweiten Partie des flüssigen Absorptionsmittels in verschiedene Stufen des Kontaktturmes und durch Einspeisen der zweiten Partie in eine höhere Stufe des Turmes als die erhitzte erste Partie.

5. Verfahren nach einen beliebigen der vorherigen Ansprüche, wobei die Kohlenwasserstoffe in dem Zugeführten Kohlenwasserstoff-Luft-Gemisch als verdampfte Kraftstoff-Light-Ends enthalten sind, dadurch gekennzeichnet, daß als flüssiges Absorptionsmittel Kraftstoff dient und daß der Kraftstoff einem kontinuierlichen Recycling zwischen dem Kontaktturm (86) und einem Behälter für gelagerten Kraftstoff unterliegt.

6. Anlage zum Wiedergewinnen von Kohlenwasserstoffen aus einem Kohlenwasserstoffdampf-Luft-Gemisch, mit den Merkmalen: Ein Paar Adsorber (12, 14), welche Betten eines Feststoff-Adsorptionsmittels mit einer Affinität zu Kohlenwasserstoffen enthalten und erste (16, 20) sowie zweite (18, 22) Verbindungen an entgegengesetzten Enden dieser Betten haben; den genannten Verbindungen zugeordnete Ventile (32, 34) um das Kohlenwasserstoffdampf-Luft-Gemisch zu veranlassen, wahlweise durch den einen oder den anderen der erwähnten Adsorber sowie aus des jeweils entsprechenden zweiten Verbindung in die Atmosphäre zu strömen; eine Flüssigkeitsring-Saugpumpe (Vakuumpumpe 72) mit einer Saugverbindung, die via Ventile (38, 40) wahlweise mit dem anderen der genannten Adsorber verbindbar ist sowie ein Separator (84), der mit der Auslaß-Verbindung (76) der Saugpumpe (72) verbunden ist, um das Kohlenwasserstoffdampf-Luft-Gemisch von der Sperrflüssigkeit abzuscheiden, in welche es in der Saugpumpe absorbiert wird; ferner ein Kontaktturm (86) zum Kontaktieren des Abgeschiedenen Kohlenwasserstoffdampf-Luft-Gemisches mit einem flüssigen Adsorptionsmittel; und mit den kennzeichnenden Merkmalen: das in den Kontaktturm (86) eingespeiste flüssige Absorptionsmittel fließt durch:

a) eine erste Speiseleitung (126, 116), welche mit einer Seite eines Wärmetauschers (100) verbunden ist, während dessen andere Seite mit dem Sperrflüssigkeits-Kreislauf (80, 98, 78) der Saugpumpe (72) sowie dem Separator (84) verbunden ist, und durch
b) eine zweite Speiseleitung (120), welche im Bypass zu dem Wärmetauscher (100) geführt und in den Kontaktturm (86) offen ist, so daß die Sperrflüssigkeit gekühlt sowie das durch die erste Speiseleitung (126, 116) eingespeiste flüssige Absorptionsmittel vor dem Einspeisen in den Kontaktturm erwärmt wird.

7. Anlage nach Anspruch 6, dadurch gekennzeichnet, daß die zweite Speiseleitung (120) mit dem Kontaktturm (86) an einem Punkt (112) oberhalb des Punktes (114) verbunden ist, an dem die erste Speiseleitung (126, 116) angeschlossen ist.

8. Anlage nach Anspruch 7, dadurch gekennzeichnet, daß der Kontaktturm (86) auf dem Separator angeordnet ist, so daß mit Kohlenwasserstoffen angereichertes flüssiges Absorptionsmittel aus dem Kontaktturm (86) in den Separator (84) fällt.

9. Anlage nach Anspruch 6, 7 oder 8, dadurch gekennzeichnet, daß ein Lufteinlaß (62, 66) vorgesehen ist, so daß selektiv Luft via die zweite Verbindung zu dem anderen Adsorber (12, 14) während dessen Entleerung angesaugt werden kann.

**Revendications**

1. Un procédé pour la récupération d'hydrocarbures à partir d'un mélange d'entrée d'air et d'hydrocarbures comprenant: le passage dudit mélange d'entrée à travers un premier lit d'adsorbant solide ayant une affinité pour les hydrocarbures, grâce à quoi les hydrocarbures sont adsorbés sur ledit lit en un courant de gaz résiduel d'air essentiellement dépourvu d'hydrocarbures est produit; le rejet de l'air essentiellement dépourvu d'hydrocarbures dans l'atmosphère; la mise sous vide d'un second lit d'adsorbant solide sur lequel des hydrocarbures sont adsorbés, par pompage avec une pompe à vide (72) à joint liquide, pour désorber les hydrocarbures du lit; la séparation de l'air et des hydrocarbures absorbés par ledit joint liquide dans la pompe à vide à joint liquide, d'avec le joint liquide dans un séparatuer (84); le contact du mélange séparé d'air et d'hydrocarbures produit lors de la séparation avec un absorbant liquide ayant une affinité pour les hydrocarbures dans une tour de contact (86), grâce à quoi une portion principale des hydrocarbures en est éliminée pour produire un absorbant liquide riche en hydrocarbures et un courant de gaz résiduel comprenant de l'air et une faible portion d'hydrocarbures; la combinaison du courant de gaz résiduel avec l'air d'entrée grâce à quoi les hydrocarbures qu'il contient sont adsorbés sur le premier lit d'adsorbant solide; périodiquement la modification du schéma d'écoulement du mélange d'entrée d'air et d'hydrocarbures et le changement du lit d'adsorbant solide qui est mis sous vide, grâce à quoi, lorsque le lit, à travers lequel le mélange d'entrée d'air et d'hydrocarbures s'écoule, devient chargé des hydrocarbures adsorbés, le mélange d'entrée d'air et d'hydrocarbures est amené à s'écouler à travers le lit qui vient juste d'être mis sous vide; dans lequel le courant d'absorbant liquide dirigé vers la tour de contact (86) avec le mélange d'air et d'hydrocarbures riche en hydrocarbures produit pendant la mise sous vide est divisé en une première portion et une seconde portion; dans lequel la première portion passe avec échange de chaleur avec le joint liquide s'écoulant vers la pompe à vide à partir du séparateur pour chauffer la première portion et refroidir le joint liquide et est ensuite introduite dans la tour de contact (86); et dans lequel la seconde portion est amenée à ladite tour de contact (86) sans subir ledit échange de chaleur.

2. Un procédé selon la revendication 1, dans lequel une certaine quantité d'air dépourvu d'hydrocarbures est introduite dans ledit second lit pendant la mise sous vide dudit lit, grâce à quoi des hydrocarbures additionnels sont extraits dudit lit et un mélange additionnel d'air et d'hydrocarbures est produit.

3. Un procédé selon la revendication 2, dans lequel l'air dépourvu d'hydrocarbures est chauffé avant l'introduction dans ledit lit.

4. Un procédé selon la revendication 1, dans lequel la première et la seconde portion de l'absorbant liquide sont introduites à des niveaux différents de ladite tour de contact et la seconde portion est introduite à un niveau plus élevé de celle-ci que la première portion chauffée.

5. Un procédé selon l'une quelconque des revendications précédentes, dans lequel les hydrocarbures contenus dans le mélange d'entrée d'air et d'hydrocarbures sont des fractions légères d'essence vaporisées; l'absorbant liquide utilisé est l'essence; et l'essence est recyclée en continu entre la tour de contact (86) et une source d'essence stockée.

6. Appareil pour la récupération d'hydrocarbures à partir d'un mélange d'air et de vapeurs d'hydrocarbures comprenant: une paire d'adsorbeurs (12, 14) contenant des lits d'adsorbant solide ayant une affinité pour les hydrocarbures et ayant des premiers (16, 20) et des seconds (18, 22) raccordements sur des côtés opposés desdits lits; des vannes (32, 34) associées auxdits premiers raccordements pour provoquer sélectivement l'écoulement du mélange d'air et de vapeurs d'hydrocarbures à travers l'un ou l'autre desdits absorbeurs et dans l'atmosphère à partir du second raccordement associé; une pompe à vide (72) à joint liquide ayant un raccordement d'aspiration pouvant être raccordé sélectivement, par l'intermédiaire des vannes (38, 40) à l'autre desdits adsorbeurs (12, 14); et un séparateur (84) raccordé au raccord de refoulement (76) de la pompe à vide (72) pour séparer le mélange d'air et de vapeurs d'hydrocarbures d'avec le joint liquide dans lequel il est absorbé dans la pompe à vide; et une tour de contact (86) pour mettre en contact le mélange séparé d'air et de vapeurs d'hydrocarbures avec un absorbant liquide; dans lequel l'absorbant liquide introduct dans la tour de contact (86) l'est par l'intermédiaire (a) d'une première canalisation d'alimentation (126, 116) qui est raccordée à un des côtés d'un échangeur de chaleur (100) dont l'autre côté est raccordé au circuit de joint liquide (80, 98, 78) de la pompe à vide (72) et au séparateur (84) et (b) une seconde canalisation d'alimentation (120) court-circuitant ledit échangeur de chaleur (100) et débouchant dans ladite tour de contact (86) si bien que le joint liquide est refroidi et l'absorbant liquide introduit par la première canalisation d'alimentation (126, 116) est chauffé avant d'être introduit dans la tour de contact (86).

7. Appareil selon la revendication 6, dans lequel ladite seconde canalisation d'alimentation (120) est raccordée à ladite tour de contact (86) en un point (112) situé au-dessus du point (114) auquel ladite première canalisation d'alimentation (126, 116) lui est raccordée.

8. Appareil selon la revendication 7, dans lequel la tour de contact (86) est montée sur ledit séparateur, grâce à quoi l'absorbant liquide riche en hydrocarbures tombe de la tour de contact (86) dans ledit séparateur (84).

9. Appareil selon la revendication 6, 7 ou 8 dans lequel une entrée d'air (62, 66) est disposée pour permettre sélectivement d'amener l'air par l'intermédiaire dudit second raccordement pour l'introduire dans l'autre adsorbeur (12, 14) pendant sa mise sous vide.